Europäisches Patentamt

European Patent Office

Office européen des brevets

(11) Veröffentlichungsnummer: **0 085 427**
**B1**

(12)  **EUROPÄISCHE PATENTSCHRIFT**

(45) Veröffentlichungstag der Patentschrift :
09.07.86

(21) Anmeldenummer : 83100904.8

(22) Anmeldetag : 01.02.83

(51) Int. Cl.⁴ : **F 02 B 53/08**, F 01 C 1/46,
F 01 C 19/02

(54) Viertaktverbrennungsmotor.

(30) Priorität : 02.02.82 DE 3203303

(43) Veröffentlichungstag der Anmeldung :
10.08.83 Patentblatt 83/32

(45) Bekanntmachung des Hinweises auf die Patenterteilung : 09.07.86 Patentblatt 86/28

(84) Benannte Vertragsstaaten :
DE FR GB IT NL

(56) Entgegenhaltungen :
DE-A- 2 724 474
FR-A- 948 244
US-A- 3 228 196
US-A- 3 999 905
US-A- 4 170 978

(73) Patentinhaber : Röser, Walter
In den Benden 4
D-5180 Eschweiler (DE)

(72) Erfinder : Röser, Walter
In den Benden 4
D-5180 Eschweiler (DE)

(74) Vertreter : Garbeck, Hans, Dr.-Ing.
Artilleriestrasse 14
D-5170 Jülich (DE)

EP 0 085 427 B1

**Beschreibung**

Die Erfindung bezieht sich auf einen Viertakt-Verbrennungsmotor, bei dem zwei scheibenförmige Drehkolben, von denen jeder in einem der Dicke des Kolbens entsprechenden Kolbenraum mit kreiszylinderförmiger Umlaufbahn für den Kolben auf der die Kolbenräume durchdringenden Motorwelle aufsitzend gelagert ist, vorgesehen sind, wobei der erste Kolbenraum mit einem Ansaugstutzen für das Kraftstoff-Luft-Gemisch, der zweite Kolbenraum mit einer Ausstoßöffnung für die entspannten Verbrennungsgase und beide Kolbenräume über mit einem Raum zur Zündung des Kraftstoff-Luft Gemisches in Verbindung stehende Kanäle mit darin angeordneten Ventilen miteinander verbunden sind, wobei der in dem ersten Kolbenraum vorgesehene Drehkolben als Exzenterkolben mit einem solchen Umfang ausgebildet ist, daß der Exzenterkolben mit der achsparallelen Linie seines Außenumfangs, die den größten Abstand von der Drehachse aufweist, während seiner Drehbewegung in Berührung mit der Umlaufbahn des ersten Kolbenraums steht, wobei an dem ersten Kolbenraum zwischen dem Ansaugstutzen und der Einmündung des Verbindungskanals vom Zündraum in den ersten Kolbenraum, ein in den ersten Kolbenraum hineingreifender, unter der Wirkung einer Federkraft auf der Außenfläche des Exzenterkolbens gleitend aufsitzender Gleitschieber vorgesehen ist, der während der Kolbendrehung zusammen mit der Berührungslinie des Exzenterkolbens an der Umlaufbahn einen veränderlichen Ansaugrum und einen veränderlichen Verdichtungsraum bildet, und wobei der Drehkolben in dem zweiten Kolbenraum nach Zündung des Kraftstoff-Luft-Gemischs bis zum Ausstoßen unter der Wirkung der Explosionsgase steht.

Verbrennungsmotoren dienen dazu, in Brennstoffen enthaltene chemische Energie durch Verbrennung in einem Raum, in dem ein beweglicher Kolben angeordnet ist, in thermische Energie und diese in mechanische Arbeit umzuwandeln. Der Kolben wird infolge des Drucks der im Kolbenraum entstehenden Verbrennungsgase bewegt und die Kolbenbewegung auf die Welle des Motors übertragen. Dabei wird ein Teil der während der Kolbenbewegung freiwerdenden mechanischen Energie von einem mit der Motorwelle verbundenen Schwungrad gespeichert, das auch im Anschluß an den Arbeitsvorgang oder Arbeitstakt die Motorwelle unter allmählicher Energieabgabe weiterdreht.

Bei Viertakt-Verbrennungsmotoren besteht das Arbeitsspiel im Kolbenraum aus vier Takten : 1. Ansaugen, 2. Verdichten, 3. Zünden, Verbrennen, Ausdehnen (Arbeitstakt), 4. Ausschieben der Verbrennungsgase. Viertakt-Verbrennungsmotoren sind in verschiedenen Ausführungsformen bekannt.

So gehört zum bekannten Stande der Technik ein Viertakt-Verbrennungsmotor, bei dem über Pleuelstangen und Kreuzköpfe mit der als Kurbelwelle ausgebildeten Motorwelle verbundene Kolben vorgesehen sind, die zwischen den beiden Umkehrpunkten beziehungsweise Totpunkten in Zylindern hin- und herbewegt werden. Für einen Arbeitstakt ist bei diesem bekannten Verbrennungsmotor jeweils ein Kolbenhub erforderlich ; daher benötigt die Motorwelle zur Durchführung der vier erforderlichen Takte jeweils zwei Umdrehungen. Während dieser beiden Umdrehungen vollzieht sich somit jeweils nur ein Arbeitstakt. Als Steuerorgane für den Einlaß und Auslaß des Arbeitsmittels sind bei diesem bekannten Viertakt-Verbrennungsmotor im allgemeinen Ventile vorgesehen, die von einer Steuerwelle betätigt werden.

Der Wirkungsgrad dieser bekannten Verbrennungsmotoren ist verhältnismäßig gering, weil nur ein Teil der bei der Verbrennung freiwerdenden Energie in mechanische Arbeit umgesetzt wird.

Daher hat man, insbesondere auch um den Umweg der Umwandlung der Translationsbewegung der Kolben in die Rotationsbewegung der Motorwelle zu vermeiden, einen Viertakt-Verbrennungsmotor vorgeschlagen, bei dem ein sich drehender, mit der Motorwelle in Verbindung stehender scheibenförmiger Kolben vorgesehen ist, durch den die vier Takte, Ansaugen, Verdichten, Arbeiten und Ausschieben während der Drehbewegung des Kolbens ausgeführt werden.

Bei diesem als Kreiskolbenmotor bezeichneten Viertakt-Verbrennungsmotor läuft der dreieckförmige, mit konvexen Seitenflächen ausgebildete Kolben auf einer nach Art einer Epitrochoide ausgebildeten Bahn so um, daß er zusammen mit der Wandung des Gehäuses Arbeitstaktkammern mit sich ständig veränderndem Rauminhalt bildet. Während des Umlaufs liegen die drei Eckkanten des Kolbens, an denen Dichtleisten angeordnet sind, ständig an der Mantelwandung des Gehäuses an. Infolgedessen haben die von den Kolbenaußenflächen mit der Mantelwandung gebildeten drei Kammern eine sichelförmige Form. Dabei führt der Kolben eine Drehbewegung um seine Achse aus, wobei sich die Achse zugleich auf einer Kreisbahn bewegt. Die Kreisbahn des Kolbens wird durch die zentrisch im Motorgehäuse gelagerte Welle bewirkt, die im Bereich des Kolbens als Exzenter ausgebildet ist. Die vom Exzenter erzeugte Drehbewegung des Kolbens um die Kreisbahn wird durch eine Gleichlaufverzahnung erzwungen. Hierzu ist auf einer Seite innerhalb des Kolbens eine Innenverzahnung vorgesehen, die sich auf einem mit der Kurbelwelle verbundenen Ritzel abwälzt. Das Hohlrad und insofern auch der Kolben ist somit in bezug auf das Ritzel exzentrisch gelagert. Bei dem bekannten Kreiskolbenmotor sind die veränderlichen Arbeitskammern gegeneinander mit sich über die Scheibendicke erstreckenden Kanten an der Außenfläche abgedichtet. An den drei Eckkanten des Kolbens sind daher jeweils achsparallele Nuten eingefräst, in die Dichtleisten mit geringem Spiel eingelegt sind. Die Dichtleisten sind im Nutengrund durch wellenförmige Streifenfedern unterlegt. Vom Gasdruck unterstützt werden sie infolgedessen nach außen gegen die Lauffläche des Gehäusemantels gepreßt. Die Seitenflächen des Kolbens sind gegen die Seitenteile des Gehäuses ebenfalls abgedichtet.

Zwar wird durch den bekannten Kreiskolbenmotor gegenüber dem Zylinderkolbenmotor ein höherer Wirkungsgrad bei der Energieumwandlung erreicht. Nachteilig ist jedoch, insbesondere für die Verwendung in Kraftfahrzeugen, der komplizierte Drehvorgang des zahnradgesteuerten Kolbens, weil dieser die Gefahr von Störungen im Betrieb in sich birgt. Nachteilig ist ferner, daß infolge der Form des Verbrennungsraumes dessen Volumen begrenzt ist und daß der Brennstoffverbrauch verhältnismäßig hoch ist. Ein weiterer Nachteil besteht schließlich darin, daß die erforderliche Abdichtung in längerem Betrieb bislang nicht den in der Praxis an sie zu stellenden Anforderungen genügt.

Zwar ist in der DE-OS 27 24 474 auch schon ein Verbrennungsmotor vorgeschlagen worden, bei dem zwei Drehkolben auf einer zentralen Welle angeordnet drehzahlgleich im Verbund umlaufen sollen.

Von den beiden Drehkolben ist der zum Ansaugen und zugleich zur Vorverdichtung dienende Drehkolben exzentrisch gelagert mit einem solchen Umfang ausgebildet, daß der Kolben mit der achsparallelen Linie seines Außenumfangs, die den größten Abstand von der Drehachse aufweist, während seiner Drehbewegung in Berührung mit der Umlaufbahn für den Kolben steht. Zusätzlich ist ein Zylinder mit einem Hubkolben vorgesehen, durch den der Verdichtungsgrad erhöht werden soll. Darüber, wie der Arbeitskolben gestaltet werden soll, wird nichts gesagt.

In der FR-PS 948 244 wird ferner ein Motor beschrieben, der auch als Verbrennungsmotor verwendbar sein soll. Bei diesem Motor sollen die verdichteten Gase auf einen Drehkolben wirken, dessen Außenumfang zum Teil kreiszylinderförmig ausgebildet ist, der außerdem in Drehrichtung gesehen, am Anfang des kreiszylinderförmigen Abschnitts der Umfangsfläche davon ausgehend eine radial geführte Auffangfläche für die verdichteten Gase aufweist und bei dem, von dem achsnäheren Ende der Auffangfläche ausgehend der verbleibende Abschnitt der Umfangsfläche des Drehkolbens so ausgebildet ist, daß er entgegen der Drehrichtung des Kolbens gesehen mit zunehmendem Radius in stetiger Kurvenführung in den kreiszylinderförmigen Abschnitt der Umfangsfläche des Arbeitskolbens übergeht. Wie Ansaug- und Verdichtungsvorgang erfolgen sollen, darüber wird nichts gesagt. Beide vorbezeichneten Vorschläge geben weder für sich allein, noch zusammen einen Hinweis darauf, wie ein Verbrennungsmotor beschaffen sein muß, bei dem die Energie des Kraftstoffs direkt in die Rotationsbewegung drehbar gelagerter Kolben umgesetzt wird.

Aufgabe der Erfindung ist es, einen Viertakt-Verbrennungsmotor zu schaffen, bei dem unter Ausnutzung der Vorteile, die daraus entstehen, daß die Energie des Kraftstoffes bei der Verbrennung direkt in die Rotationsbewegung drehbar gelagerter Kolben umgewandelt wird, die unmittelbar mit der Motorwelle verbunden sind, daß zugleich der Arbeitsablauf, insbesondere die Drehbewegung der Kolben vereinfacht wird, ferner die Voraussetzungen für eine bessere Abdichtung geschaffen werden und insbesondere infolge leicht zu ermöglichender Vergrößerung des für die Arbeitstakte zur Verfügung stehenden Volumeninhalts der Wirkungsgrad bei der Energieumwandlung erhöht und vor allem eine unvollkommene Verbrennung ausgeschlossen wird.

Diese Aufgabe wird bei einem Viertakt-Verbrennungsmotor der eingangs bezeichneten Art gemäß der Erfindung wie in den Ansprüchen gekennzeichnet gelöst.

Der nach den Merkmalen gemäß der Erfindung ausgebildete Viertakt-Verbrennungsmotor hat den großen Vorzug, daß die dabei verwendeten Kolben auf einer geraden Welle angeordnet sind, daß die Ölzuführung unabhängig von der Brennstoffzuführung ist, insbesondere aber, daß die Bildung der veränderlichen Arbeitstaktkammern nicht wie bei dem bekannten Kreiskolbenmotor über die Ein- beziehungsweise Auslaßöffnung mittels der Kolben gesteuert wird, sondern zur Steuerung besondere Ventile vorgesehen sind. Das hat eine weitaus störungsfreiere Arbeitsweise zur Folge, als dies bislang möglich war. Darüber hinaus bestehen weitere erhebliche Vorzüge des Viertakt-Verbrennungsmotors gemäß der Erfindung gegenüber dem bekannten Kreiskolbenmotor darin, daß die Formgebung der Umlaufbahn für die beiden gemäß der Erfindung vorgesehenen Kolben und auch die Form der Kolben selbst sowie dessen Drehbewegung erheblich einfacher sind.

Im folgenden wird der Viertakt-Verbrennungsmotor gemäß der Erfindung anhand der lediglich ein Ausführungsbeispiel wiedergebenden Zeichnungen näher erläutert. Es zeigen:

Figur 1 einen vereinfachten Längsschnitt durch den Motor,

Figur 2 einen Teilschnitt durch die erste Kolbenkammer nach der Linie A-A gemäß Fig. 1, wobei der erste Kolben gegenüber der Stellung in Fig. 1 um 180° gedreht ist,

Figur 3 einen Teilschnitt durch die zweite Kolbenkammer nach der Linie B-B gemäß Fig. 1,

Figur 4 eine perspektivische Seitenansicht der Brennkammer mit Schwenkschieber,

Figur 5 einen Längsschnitt durch den Schwenkschieber gemäß Fig. 4 mit daran vorgesehener Andruckleiste,

Figur 6 einen Längsschnitt durch eine Dichtleiste,

Figur 7 eine Seitenansicht der Dichtleiste gemäß Fig. 6.

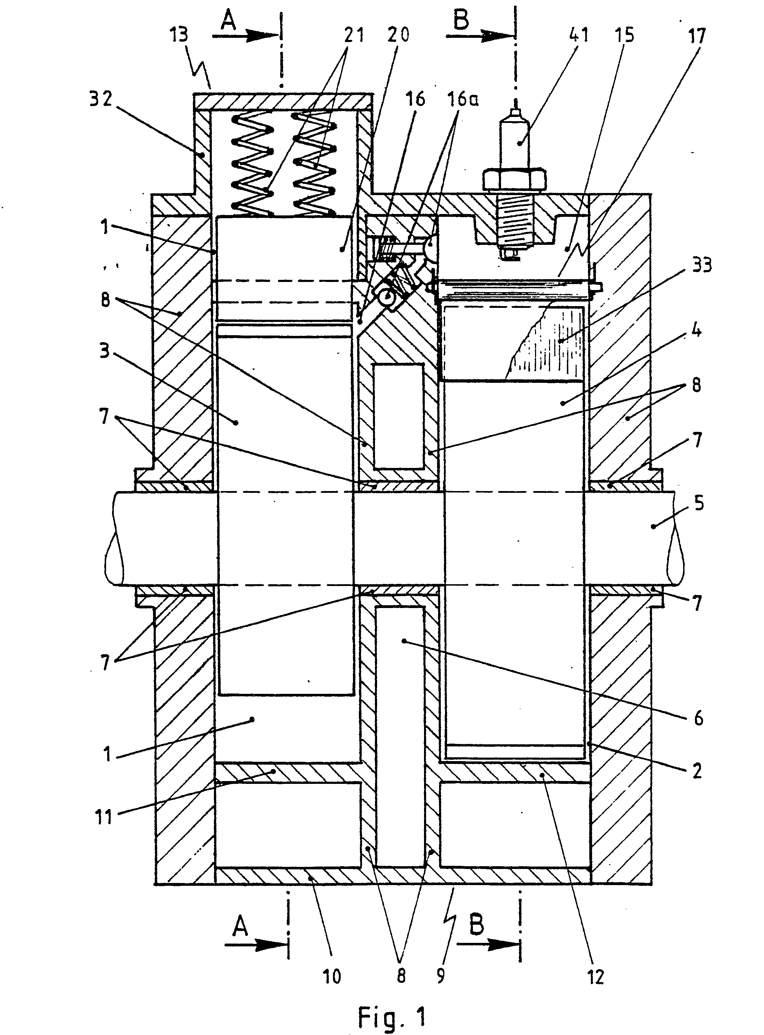

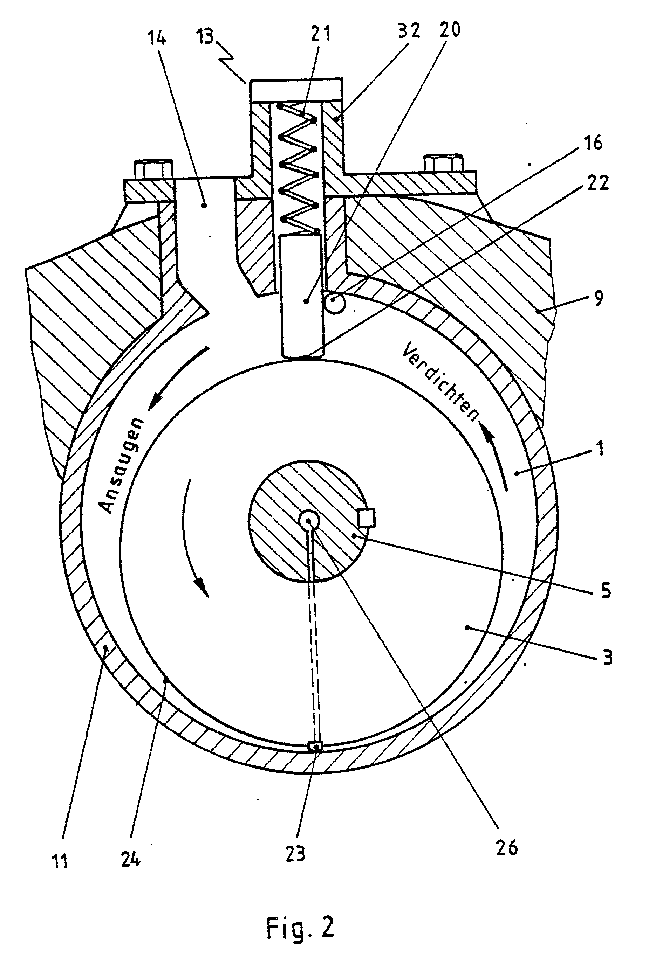

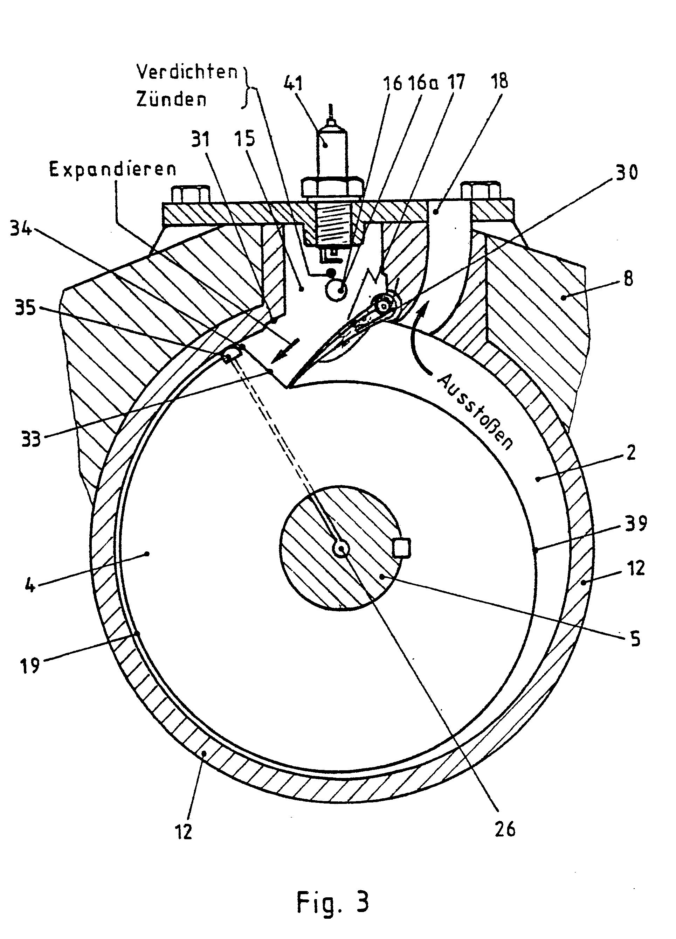

In Fig. 1 der Zeichnung ist ein Viertakt-Verbrennungsmotor in seinem grundsätzlichen Aufbau mit einem in einem ersten Kolbenraum 1 exzentrisch mit der Motorwelle 5 verbundenen und um deren Achse drehbar gelagerten ersten Kolben 3 und mit einem in einem zweiten Kolbenraum 2 zentrisch mit der Motorwelle 5 verbundenen und um deren Achse drehbar gelagerten, ebenfalls scheibenförmigen zweiten Kolben 4 (vergleiche dazu auch Fig. 2 und Fig. 3), sowie einem zwischen beiden Kolbenräumen 1 und 2 vorgesehenen Kühlraum 6 und Gleitlagern 7 für die Motorwelle 5 dargestellt.

Wie aus Fig. 1 außerdem zu entnehmen, sind die beiden drehbar gelagerten Kolben 3 und 4 scheibenförmig mit parallelen Seitenflächen ausgebildet. Sie drehen sich zwischen zwei planparallelen Seitenteilen 8 des Motorgehäuses 9. Dabei sind — wie in der Zeichnung nicht dargestellt ist — an den den Seitenteilen 8 des Motorgehäuses 9 zugekehrten Flächen der Kolben 3 und 4 — wie in der Zeichnung nicht dargestellt — Dichtleisten vorgesehen. Sie können beispielsweise in zu ihrer Aufnahme vorgesehene Nuten eingebettet sein. Die Seitenteile 8 des Motorgehäuses 9 sind mit den mit dem Mantel 10 des Motorgehäuses 9 in Verbindung stehenden Umlaufbahnen 11 und 12 für die Kolben 3 und 4 verbunden und bilden jeweils den Kolbenraum 1 oder 2 für die Kolben 3 oder 4, wobei die in Gleitlagern 7 gelagerte Motorwelle 5 durch die Seitenteile 8 des Gehäuses 9 hindurchgreift.

Wie aus Fig. 2 und Fig. 3 zu entnehmen, sitzen beide Kolben 3 und 4 auf der Motorwelle 5 auf. Dabei kann die Verbindung zwischen Motorwelle 5 und Kolben 3 und 4 — wie in der Zeichnung angedeutet — beispielsweise durch Verkeilen stattfinden. Die Umlaufbahnen 11 und 12 für die Kolben 3 und 4 sind kreiszylinderförmig ausgebildet. Beide Umlaufbahnen 11 und 12 sind so ausgebildet, daß sie eine größere Fläche umschließen als die Umlaufflächen beider Kolben 3 und 4. Dabei weist die Umlaufbahn 11 für den ersten als Kreisscheibe ausgebildeten Kolben, den Exzenterkolben 3, einen Ausschnitt für ein als Gleitschieberventil 13 ausgebildetes Steuerventil sowie eine Ansaugöffnung 14 für das Kraftstoff-Luft-Gemisch auf. Der Exzenterkolben 3 hat einen solchen Umfang, daß er mit der in gleitender Reibung in einer Kreisbewegung auf der Umlaufbahn 11 achsparallelen Linie seines Außenumfanges, die den größten Abstand von der Drehachse aufweist, während seiner Drehbewegung mit der Umlaufbahn in Berührung steht.

Die in dem zweiten Kolbenraum 2 angeordnete Umlaufbahn 12 für den Arbeitskolben 4 weist — wie aus Fig. 3 hervorgeht — einen Ausschnitt für die Brennkammer 15 auf.

Der erste Kolbenraum 1 ist zur Bildung der Ansaugkammer und für den Verdichtungsvorgang bestimmt. Er steht über einen Überströmkanal 16, in dem ein zu einem vorgegebenen Zeitpunkt, beispielsweise in Abhängigkeit von einem vorbestimmten Druck des verdichteten Gases ansprechendes Ventil, das zum Beispiel ein als Druckventil ausgebildetes Einwegventil 16a vorgesehen ist, in Verbindung mit der über eine verschließbare Öffnung mit dem zweiten Kolbenraum 2 verbundenen Brennkammer 15.

Die Ausstoßöffnung 18 für die Verbrennungsgase ist am zweiten Kolbenraum 2 vorgesehen. Die Außenfläche des im zweiten Kolbenraum 2 umlaufenden zentrisch gelagerten Arbeitskolbens 4 hat über eine vorgegebene Länge die Form eines Kreiszylindermantels 19, dessen Radius mit geringem Spiel der Umlaufbahn 12 für den Arbeitskolben 4 entspricht.

Die Bildung der Arbeitstaktkammer und die Steuerung der Arbeitstakte erfolgt bei dem Viertakt-Verbrennungsmotor gemäß der Erfindung mittels des Exzenterkolbens 3 in dem ersten Kolbenraum 1 und des Arbeitskolbens 4 in dem zweiten Kolbenraum 2 sowie mittels des in den ersten Kolbenraum 1 hineinragenden Gleitschieberventils 13 und eines Schwenkventils 17, das die Öffnung der Brennkammer 15 gegenüber dem zweiten Kolbenraum 2 während des Auschiebens der verdichteten Gase aus dem ersten Kolbenraum 1 in die Brennkammer 15 verschließt.

Die zur Bildung der Arbeitstaktkammern erforderlichen Vorgänge spielen sich dabei wie folgt ab. Durch den in den ersten Kolbenraum 1 hineinragenden und während der Umdrehung des Exzenterkolbens 3 auf der Außenfläche des Exzenterkolbens 3 aufliegenden Gleitschieber 20 wird der Kolbenraum 1 in zwei sich ständig ändernde Arbeitstaktkammern aufgeteilt. Das ergibt sich daraus, daß der Gleitschieber 20, der parallel zur Achse des Exzenterkolbens 3 eine der Kolbendicke entsprechende Abmessung aufweist, zwischen der Ansaugöffnung 14 für das Kraftstoff-Luft-Gemisch und der Einmündung des Überströmkanals 16 in die Brennkammer 15 in den Kolbenraum 1 eingreift. Um während der Drehbewegung des Exzenterkolbens 3 einen hinreichenden Kontakt zwischen Gleitschieber 20 und Kolbenaußenfläche zu gewährleisten, steht der Gleitschieber 20 — wie aus Fig. 1 in Verbindung mit Fig. 2 zu ersehen — in der für ihn vorgesehenen Führung 32 unter der Wirkung einer Federkraft 21. Dabei kann die Federkraft 21 — wie in Fig. 1 dargestellt — aus zwei Spiralfedern gebildet sein. Außerdem weist der Gleitschieber 20 an seinem freien Ende eine abgesehen von den achsparallelen Kanten plangeschliffene ebene Fläche 22 auf, so daß praktisch zwischen Kolbenaußenfläche und Gleitschieber 20 lediglich Kontakt auf einer achsparallelen Linie besteht. Dadurch entsteht eine sehr wirkungsvolle Abtrennung zwischen dem Kolbenraum 1 beiderseits des Gleitschiebers 20.

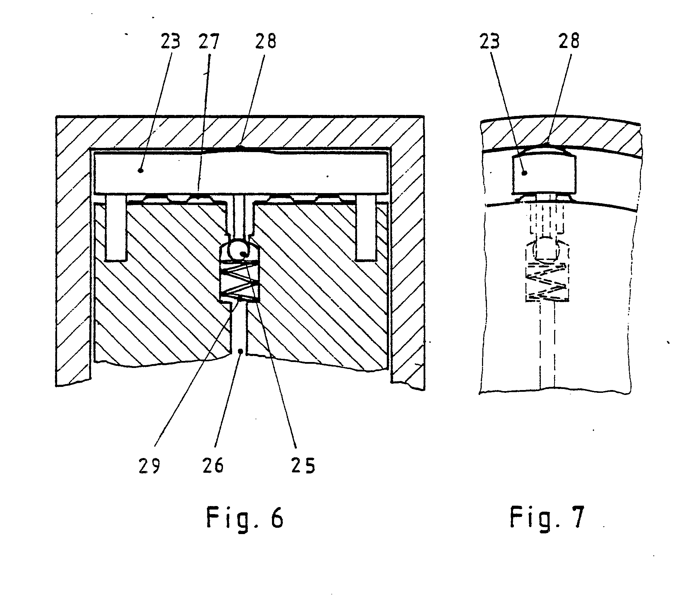

Eine weitere Abtrennung wird auf folgende Weise bewirkt: Während der Umdrehung des Exzenterkolbens 3 bleibt die Stelle seiner Außenfläche, die die größte Exzentrizität aufweist, in ständigem Kontakt mit der Umlaufbahn 11. An dieser Stelle der Außenfläche ist eine achsparallele Dichtleiste 23 vorgesehen. Dadurch wird die andere, und zwar die veränderliche Abgrenzung der Arbeitstaktkammern gebildet. Um die Dichtwirkung zu erhöhen, ist — wie aus Fig. 6 hervorgeht — zwischen Kolbenaußenfläche 24 und der unteren Seite der Dichtleiste 23 ein Kugeldruckventil 25 vorgesehen, das über eine in Fig. 2 angedeutete Ölzuführungsleitung 26, die über eine in der Motorwelle 5 vorgesehene Ölleitung mit der für den Motor vorgesehenen Ölpumpe in Verbindung steht. Die Ölleitung in der Motorwelle 5 ist über eine in der Zeichnung nicht dargestellte Ölrücklaufleitung so verbunden, daß aus Hin- und Rücklaufleitung ein Kreislauf gebildet wird. Die Dichtleiste 23 ist mit wellenförmigen Streifenfedern 27 unterlegt und weist (siehe Fig. 7) ein sich aus der Kolbenaußenfläche 24 auf- und wieder zurückwölbendes, in der Mitte abgeflachtes Profil 28 auf. Die Feder 29 des Kugeldruckventils 25 ist schwächer als die auf den Gleitschieber 20 wirkenden Federn 21. Daher wird das unter der Dichtleiste 23 angeordnete Druckventil 25 beim Passieren des Gleitschiebers 20 betätigt und infolgedessen Öl zugeführt.

Während der Umdrehung des Exzenterkolbens 3 werden somit jeweils zwischen der auf der Außenfläche 24 des Exzenterkolbens 3 aufsitzenden Gleitfläche des Gleitschiebers 20 und der Dichtleiste 23 für den Exzenterkolben 3 zwei veränderliche, aber gut gegeneinander abgedichtete Arbeitstakträume gebildet. Das geschieht auf folgende Weise : In dem in Drehrichtung des Exzenterkolbens 3 gesehen zwischen Gleitschieber 20 und der Dichtleiste 23 des Exzenterkolbens 3 entstehenden Raum wird wegen des infolge der Exzentrizität des Kolbens 3 und der bei der Umlaufbewegung an der Umlaufbahn 11 anliegenden Dichtleiste 23 des Exzenterkolbens 3 in dem Bereich, in den die Ansaugöffnung 14 in den Kolbenraum 1 einmündet, ein Vakuum gebildet, weil der Kolben 3 mit dem Gleitschieber 20 beim Passieren der Dichtleiste 23 an dem Gleitschieber 20 diesen vollständig zurückschiebt, wodurch der Raum zwischen Gleitschieberauflagefläche und Dichtleiste 23 auf Null reduziert wird, und infolgedessen im Bereich der Einmündung der Ansaugöffnung 14 in den Kolbenraum 1 ein Vakuum gebildet wird, in das das Kraftstoff-Luft-Gemisch einströmt. Der Ansaugraum vergrößert sich, bis die exzentrisch angeordnete Dichtleiste 23 des Exzenterkolbens 3 wieder in Kontakt mit dem Gleitschieber 20 tritt. Während einer Umdrehung des Exzenterkolbens 3 wird zugleich infolge der in gleitender Reibung der auf der Kolbenumlaufbahn 11 geführten Dichtleiste 23 das bei der vorhergehenden Drehung angesaugte Gemisch verdichtet und nach Überschreiten eines vorbestimmten Drucks, auf den das in dem Überströmkanal 16 zwischen dem ersten Kolbenraum 1 und der Brennkammer 15 angeordnete zeitbeziehungsweise druckabhängige Ventil 16a anspricht, über den Überströmkanal 16 in die Brennkammer 15 ausgeschoben.

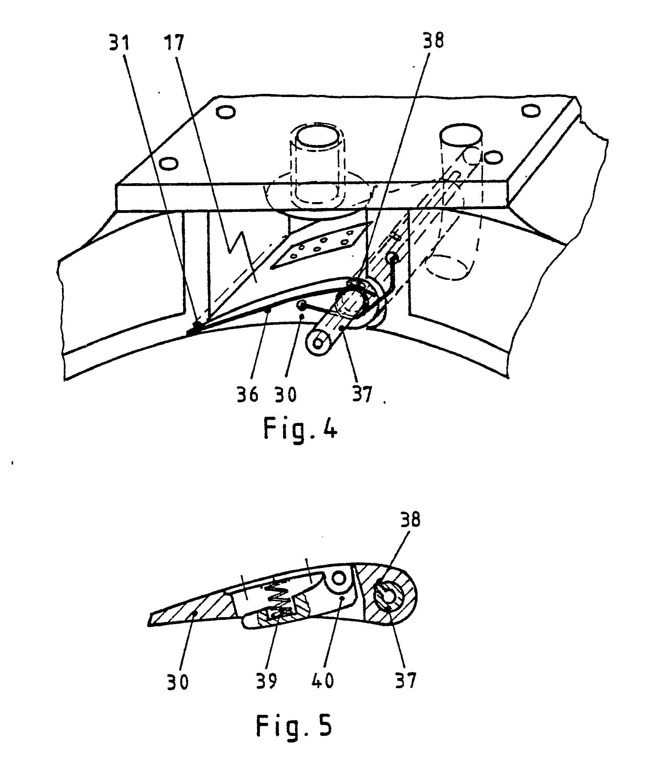

Nach vollständigem Überströmen des beispielsweise auf 1 : 10 verdichteten Gemischs aus dem ersten Kolbenraum 1 in die Brennkammer 15 wird das Gemisch gezündet. Das kann dadurch geschehen, daß das Verdichtungsverhältnis so gewählt wird, daß die Temperatur des Gemischs infolge der durch die Verdichtung erzeugten Wärme oberhalb der Temperatur liegt, bei der Selbstzündung eintritt. Dies ist bei dem Viertakt-Verbrennungsmotor gemäß der Erfindung deshalb möglich, weil anders als bei dem bekannten Viertakt-Verbrennungsmotor in der Ausgestaltung als Kolbenzylindermotor bei dem Viertakt-Verbrennungsmotor gemäß der Erfindung während des Verdichtungsvorganges kein Umkehrpunkt für die Kolbenbewegung beachtet zu werden braucht. Selbstverständlich ist es — wie für das in Fig. 1 und Fig. 3 der Zeichnung wiedergegebene Ausführungsbeispiel dargestellt — auch möglich, an dem Verbrennungsraum 15 eine Zündkerze 41 vorzusehen, die den Zündvorgang nach vollständiger Aufnahme des verdichteten Gemischs in die Brennkammer 15 auslöst. Infolge der durch die Zündung in der Brennkammer 15 eingeleiteten Verbrennung und der anschließenden Expansion des Gemischs wird die Ventilklappe 30 des Schwenkventils 17 von ihrem Ventilsitz 31 am Rande der Öffnung des Brennkammer 15 gegenüber dem zweiten Kolbenraum 2 in den Kolbenraum hinein ausgeschwenkt. Das ist deshalb möglich, weil der Arbeitskolben 4 auf der Motorwelle 5 so angeordnet ist, daß zum Zeitpunkt des Beginns der Expansion der kreiszylinderförmige Teil 19 des Arbeitskolbens 4 infolge der Drehbewegung des Arbeitskolbens 4 fortbewegt worden ist und somit die Ventilklappe 30 nicht mehr hintergreift. Zu diesem Zeitpunkt kehrt der Arbeitskolben 4 der Öffnung der Brennkammer 15 gegenüber dem Kolbenraum 2 die in Drehrichtung gesehen am Ende des kreiszylinderförmigen Teils 19 vorgesehene Auffangfläche 33 für die entstehenden Explosionsgase zu. Infolge des dadurch auf die Auffangfläche 33 ausgeübten Druckes vollzieht sich der Arbeitstakt dergestalt, daß dem Arbeitskolben 4 ein Drehimpuls erteilt wird. Dabei ist die der Umlaufbahn 12 zugekehrte Kante 34 der Auffangfläche 33 gegenüber der Kolbenbahn 12 durch eine an dieser Stelle vorgesehene Dichtleiste 35 abgedichtet. Die Ventilklappe 30 dichtet währenddessen die wie angegeben sich bildende eigentliche Arbeitstaktkammer gegenüber dem in Drehrichtung des Arbeitskolbens 4 gesehen hinter der Ventilklappe 30 liegenden freien Kolbenraum, der zur Aufnahme der verbrannten Gase bestimmt ist, ab. Zur Abdichtung gegenüber den Seitenteilen 8 des Gehäuses sind an den diesen Seitenteile zugekehrten Seitenflächen der Ventilklappe 30 Dichtleisten 36 vorgesehen, die über eine mit dem Lager 37 für die Ventilklappe 30 verbundene Schmierölzuführung 38 mit Schmieröl versorgt werden (vergleiche dazu auch Fig. 4). Während des Espansionsvorgangs liegt die Ventilklappe 30 auf dem sich entgegen der Drehrichtung des Arbeitskolbens 4 gesehen an die Auffangfläche 33 anschliessenden kurvenförmigen Teil der Außenfläche des Arbeitskolbens 4 auf und bildet dabei die Trennfläche gegenüber dem in Drehrichtung des Arbeitskolbens 4 gesehen dahinterliegenden Kolbenraum. Um ein Flattern der Ventilklappe 30 auf der Außenfläche auszuschliessenb, ist mit der Ventilklappe eine Feder verbunden, durch die die Ventilklappe auf die Kolbenaußenfläche gedrückt wird.

Im Zuge der weiteren Drehbewegung des Arbeitskolbens 4 wird der in Drehrichtung gesehen hinter der Ventilklappe 30 befindliche freie Kolbenraum verkleinert. Infolgedessen werden die verbrannten Gase, die sich in diesem Raum befinden, durch die Auslaßöffnung 18 ausgestoßen.

Infolge der kurvenförmigen Ausbildung eines Teils 39 der Außenfläche des Arbeitskolbens 4 wird die veränderliche Kammer zum Ausstoßen der Verbrennungsgase im Zuge der Drehbewegung des Arbeitskolbens 4 in der Stellung des Kolbens 4, in der die Ventilklappe 30 auf den Ventilsitz 31 zum Verschließen der Brennkammer 15 gegenüber dem zweiten Kolbenraum 2 zurückgeschwenkt ist, also während der Dauer, während der der Arbeitskolben 4 mit dem kreiszylinderförmigen Teil 19 seiner Außenfläche die Ventilklappe 30 hintergreift, zum Verschwinden gebracht. Da an der Stelle, an der die Kammer zum Ausstoßen der Verbrennungsgase gegen null geht, die Auslaßöffnung 18 für die Verbrennungsgase vorgesehen ist, werden somit die Verbrennungsgase vollständig aus dem Kolbenraum 2 ausgestoßen.

Um eine Flatterbewegung der Ventilklappe 30 während des Verdichtungsvorgangs in der Brennkammer 15 auf dem Ventilsitz 31 zu vermeiden, ist (vergleiche Fig. 5) an der Ventilklappe 30 des Schwenkschiebers 17 eine unter der Wirkung einer Federkraft 39 stehende Andruckleiste 40 angelenkt, die mit ihrem freien Ende über die dem Kolbenraum 2 zugekehrte Fläche der Ventilklappe 30 hinausragt, so daß während des Hindurchgleitens der kreiszylinderförmige Teil 19 der Außenfläche des Arbeitskolbens 4 hinter der zum Verschluß der Brennkammer 15 auf ihrem Ventilsitz 31 aufliegenden Ventilklappe 30 infolge der dadurch betätigten Hebelwirkung der Andruckleiste 40 und der dadurch gespannten Feder 39 unter der Wirkung der Federkraft 39 fest auf den Ventilsitz 31 gepreßt wird.

Als Material für das Motorgehäuse 9 hat sich eine Aluminiumguß-Legierung als vorteilhaft erwiesen, für die Kolben 3 und 4 und die Umlaufbahnen 11 und 12 für die Kolben eine vergütete, unter der Bezeichnung Mahle 124 bekannte vergütete Aluminiumlegierung. Die Außenflächen der Kolben 3 und 4 und die Umlaufbahnen 11 und 12 für die Kolben sind zweckmäßig mit einem unter der Bezeichnung Nicasil bekannten Werkstoff beschichtet.

Aus der geschilderten Funktionsweise des Viertakt-Verbrennungsmotors gemäß der Erfindung wird als einer seiner besonders großen Vorzüge erkennbar, daß bei jeder Kolbenumdrehung ein Arbeitshub stattfindet. Selbstverständlich ist es ohne weiteres möglich — wie in der Zeichnung nicht dargestellt — mehrere gemäß der Erfindung gebildete Aggregate hintereinander anzuordnen, wobei dann zweckmäßig die einzelnen Aggregate in einem ihrer Anzahl entsprechenden Winkel versetzt zueinander mit der Motorwelle verbunden sind.

**Patentansprüche**

1. Viertakt-Verbrennungsmotor, bei dem zwei scheibenförmige Drehkolben, von denen jeder in einem der Dicke des Kolbens entsprechenden Kolbenraum mit kreiszylinderförmiger Umlaufbahn für den Kolben auf der die Kolbenräume durchdringenden Motorwelle aufsitzend gelagert ist, vorgesehen sind, wobei der erste Kolbenraum mit einem Ansaugstutzen für das Kraftstoff-Luft-Gemisch, der zweite Kolbenraum mit einer Ausstoßöffnung für die entspannten Verbrennungsgase und beide Kolbenräume über mit einem Raum zur Zündung des Kraftstoff-Luft-Gemisches in Verbindung stehende Kanäle mit darin angeordneten Ventilen miteinander verbunden sind, wobei der in dem ersten Kolbenraum vorgesehene Drehkolben als Exzenterkolben mit einem solchen Umfang ausgebildet ist, daß der Exzenterkolben mit der achsparallelen Linie seines Außenumfangs, die den größten Abstand von der Drehachse aufweist, während seiner Drehbewegung in Berührung mit der Umlaufbahn des ersten Kolbenraums steht, wobei an dem ersten Kolbenraum zwischen dem Ansaugstutzen und der Einmündung des Verbindungskanals vom Zündraum in den ersten Kolbenraum, ein in den ersten Kolbenraum hineingreifender, unter der Wirkung einer Federkraft auf der Außenfläche des Exzenterkolbens gleitend aufsitzender Gleitschieber vorgesehen ist, der während der Kolbendrehung zusammen mit der Berührungslinie des Exzenterkolbens an der Umlaufbahn einen veränderlichen Ansaugraum und einen veränderlichen Verdichtungsraum bildet, und wobei der Drehkolben in dem zweiten Kolbenraum nach Zündung des Kraftstoff-Luft-Gemischs bis zum Ausstoßen unter der Wirkung der Explosionsgase steht, gekennzeichnet durch die Kombination mit folgenden Merkmalen :

a) die Ausbildung des zur Zündung vorgesehenen Raumes als volumenunveränderliche Brennkammer (15),

b) die Anordnung eines Schwenkventils (17), das die Öffnung der Brennkammer (15) zum zweiten Kolbenraum (2) mindestens für die Dauer des Überströmvorganges des verdichteten Gases aus dem ersten Kolbenraum (1) in die Brennkammer (15) überdeckt,

c) die Ausbildung eines Teils der Umfangsfläche des zentrisch gelagerten zweiten als Arbeitskolben wirkenden Kolbens (4), als Teil eines Kreiszylindermantels (19), dessen Radius mit geringem Spiel der Umlaufbahn (12) für den Arbeitskolben (4) entspricht, als Auflage für das ausschwenkbare Ende des Schwenkventils (17) in der Schließstellung,

d) die Bemessung des kreiszylinderförmigen Abschnitts der Umfangsfläche des Arbeitskolbens (4) derart, daß die Dauer, während der das ausschwenkbare Ende des Schwenkventils (17) auf dem Umfang des kreiszylinderförmigen Abschnitts (19) aufliegt, der Dauer der Verdichtung vom Öffnen eines in dem Überströmkanal (16) von der ersten Kolbenkammer (1) in die Brennkammer (15) vorgesehenen zeit- bzw. druckabhängigen Ventils (16a) an bis zum Erreichen des vorbestimmten Verdichtungsverhältnisses entspricht,

e) die Anordnung des Arbeitskolbens (4) gegenüber dem Exzenterkolben (3) auf der Motorwelle (5) derart, daß der Arbeitskolben (4) das Schwenkventil (17) während der Dauer des Einströmens des verdichteten Gemischs in die Brennkammer (15) hintergreift und auf den am Rande der Öffnung der Brennkammer (15) gegenüber dem zweiten Kolbenraum (2) vorgesehenen Ventilsitz (31) drückt,

f) die Anordnung einer ebenen Fläche, die sich in Drehrichtung des Arbeitskolbens (4) gesehen am Ende des kreiszylinderförmigen Teils (19) der Außenfläche, von dieser Außenfläche des Arbeitskolbens (4) ausgehend, in den zweiten Kolbenraum (2) hinein erstreckt, als Auffangfläche (33) für die bei der Zündung der verdichteten Gase in der Brennkammer (15) entstehenden Explosionsgase dient und unter der Wirkung der Explosionsgase zugleich eine begrenzte Schwenkbewegung des Schwenkventils (17) aus der Verschlußstellung der Brennkammer (15) ermöglicht, wobei die Breite dieser ebenen Fläche der Kolbenscheibendicke entspricht, und ihre Länge nicht größer ist, als die Länge der Brennkammeröffnung senkrecht zur Kolbenachse,

g) die Formgebung des Abschnitts (39) der Außenfläche des Arbeitskolbens (4) zwischen dem sich in den Kolbenraum (2) hinein erstreckenden Ende der Auffangfläche (33) bis zum Anfang des kreiszylinderförmigen Abschnitts (19) der Außenfläche des Arbeitskolbens (4) in Drehrichtung gesehen dergestalt, daß die das ausgeschwenkte Ende des Schwenkventils (17) in geöffneter Stellung hintergreifende Außenfläche im Abschnitt (39) in stetiger Kurvenführung in den kreiszylinderförmigen Abschnitt (19) der Außenfläche des Arbeitskolbens (4) übergeht,

h) die Anordnung je einer Dichtleiste (23 und 35) an dem Exzenterkolben (3) an der Stelle des größten Abstandes der Außenfläche des Exzenterkolbens (3) von seiner Drehachse und an dem Arbeitskolben (4) an der von der Auffangfläche (33) für die Explosionsgase und dem kreiszylinderförmigen Teil (19) der Außenfläche des Arbeitskolbens (4) gebildeten Kante.

2. Viertakt-Verbrennungsmotor nach Anspruch 1, dadurch gekennzeichnet, daß der auf dem Exzenterkolben (3) gleitend aufsitzende Schieber (20) einen rechteckigen Querschnitt aufweist.

3. Viertakt-Verbrennungsmotor nach Anspruch 1, dadurch gekennzeichnet, daß die Ventilklappe (30) des Schwenkventils (17) um eine in der in Drehrichtung des Arbeitskolbens (4) gesehen ersten achsparallelen Wandung der Brennkammer (15) gelagerte Achse drehbar gelagert ist.

4. Viertakt-Verbrennungsmotor nach Anspruch 3, dadurch gekennzeichnet, daß die Ventilklappe (30) an ihren Flanken sich etwa über die Länge der Flanken erstreckende Dichtleisten (36) aufweist.

5. Viertakt-Verbrennungsmotor nach den Ansprüchen 3 oder 4, dadurch gekennzeichnet, daß an der der Brennkammer (15) zugekehrten Fläche der Ventilklappe (30) eine unter dem Druck einer Federkraft (39) mit ihrem freien Ende über die dem zweiten Kolbenraum (2) zugekehrte Fläche der Ventilklappe (30) hinauskragende, Andruckleiste (40) vorgesehen ist.

6. Viertakt-Verbrennungsmotor nach Anspruch 1, dadurch gekennzeichnet, daß unterhalb der an den Außenflächen des Exzenter- und des Arbeitskolbens (3 und 4) angeordneten Dichtleisten (23 und 35) über Zuführungsleitungen (26) mit der für den Verbrennungsmotor vorgesehenen Ölpumpe in Verbindung stehende Druckventile (25) vorgesehen sind.

7. Viertakt-Verbrennungsmotor nach Anspruch 1, dadurch gekennzeichnet, daß die an dem Arbeitskolben (4) vorgesehene Auffangfläche (33) in der Stellung des Arbeitskolbens (4) zum Zeitpunkt des Ausschwenkens der Ventilklappe (30) des Schwenkventils (17) von seinem Ventilsitz (31) senkrecht zu oder mit geringer Neigung gegenüber der der Brennkammer (15) zugewandten Fläche der Ventilklappe (30) in der am weitesten ausgeschwenkten Stellung verlaufend angeordnet ist.

8. Viertakt-Verbrennungsmotor nach Anspruch 1 und 6, dadurch gekennzeichnet, daß eine mit der Ölzuführungsleitung (26) durch die Motorwelle (5) einen Ölkreislauf bildende Ölrücklaufleitung im Motorgehäuse vorgesehen ist.

9. Viertakt-Verbrennungsmotor nach Anspruch 1, dadurch gekennzeichnet, daß zwischen dem ersten und zweiten Kolbenraum (1 und 2) zur Kühlung der Brennkammer (15) und der einander zugekehrten Seitenteile (8) der Kolbenräume (1 und 2) ein von Kühlmittel durchströmter Kühlraum (6) vorgesehen ist.

10. Viertakt-Verbrennungsmotor nach einem der vorhergehenden Ansprüche, dadurch gekennzeichnet, daß mehrere von zwei Kolbenräumen (1 und 2) und darin angeordneten Exzenter- und Arbeitskolben (3 und 4) gebildete Aggregate mit der Motorwelle (5) verbunden sind, wobei Kolbenräume (1 und 2) und Kolben (3 und 4) der Aggregate in dem Winkel einander gegenüber phasenverschoben angeordnet sind, um den die Kolben (3 und 4) abweichend gegeneinander mit der Motorwelle (5) verbunden sind.

## Claims

1. Four-stroke internal combustion engine, wherein two disc-shaped rotary pistons are provided each of which is mounted, seated on the motor shaft extending through the piston chambers, in a piston chamber corresponding to the thickness of the piston and having a circular cylindrical path of revolution for the piston, the first piston chamber being connected to a suction union for the fuel-air mixture, the second piston chamber to an exhaust port for the expanded combustion gases, and both piston chambers being connected to one another via ducts which have valves arranged therein and which are connected to a chamber for the ignition of the fuel-air mixture, the rotary piston provided in the first piston chamber being constructed as an eccentric piston with such a peripheral form that the eccentric piston is, with that axis-parallel line of its outer periphery which is at the greatest distance from the rotary axis, during its rotary movement in contact with the path of revolution of the first piston chamber, there being provided at the first piston chamber between the suction union and the mouth of the connecting duct from the ignition chamber into the first piston chamber, a slide valve which extends into the first piston chamber and bears slidably against the outer surface of the eccentric piston under the action of a spring force, and which during piston rotation forms together with the contact line of the eccentric piston on the path of revolution a variable suction chamber and a variable compression chamber, and the rotary piston in the second piston chamber being under the influence of the explosion gases after ignition of the fuel-air mixture up to the exhaust operation, characterised by the combination of the following features :

a) the construction of the chamber provided for ignition as an invariable-volume combustion chamber (15),

b) the arrangement of a pivotable valve (17) which masks the opening of the combustion chamber (15) towards the second piston chamber (2) at leastfor the duration of the transfer operation of the compressed gas from the first piston chamber (1) into the combustion chamber (15),

c) the construction of a part of the peripheral surface of the concentrically mounted second piston (4) acting as the working piston as a part of a circular cylindrical shell (19) whose radius corresponds with slight play to the path of revolution (12) for the working piston (4), as support for the outwardly pivotable end of the pivotable valve (17) in the closure position,

d) the dimensioning of the circular cylindrical portion of the peripheral surface of the working piston (4) in such a manner that the length of time during which the outwardly pivotable end of the pivotable valve (17) bears on the periphery of the circular cylindrical portion (19) corresponds to the duration of the compression from the opening of a valve (16a) dependent on time or pressure and arranged in the transfer duct (16) from the first piston chamber (1) into the combustion chamber (15), up to the attainment of the predetermined compression ratio,

e) the arrangement of the working piston (4) relatively to the eccentric piston (3) on the motor shaft (5) such that the working piston (4) engages behind the pivotable valve (17) during the duration of the inflow of the compressed mixture into the combustion chamber (15) and presses on the valve seat (31) which is provided at the edge of the combustion chamber (15) opposite the second piston chamber (2),

f) the arrangement of a plane surface, which as viewed in the direction of rotation of the working piston (4) at the end of the circular cylindrical portion (19) of the outer surface extends from this outer chamber of the working piston (4) into the second piston surface (2), as a collecting surface (33) for the explosion gases produced at the ignition of the compressed gases in the combustion chamber (15), and such arrangement allows at the same time a limited pivoting movement of the pivotable valve (17) under the influence of the explosion gases out of the closure position relatively to the combustion chamber (15), the width of this plane surface corresponding to the piston disc thickness and its length being not greater than the length of the combustion chamber opening at right angles to the piston axis,

g) the shaping of the portion (29) of the outer surface of the working piston (4) between the end of the collecting surface (33) which extends into the piston chamber (2) up to the start of the circular cylindrical portion (19) of the outer surface of the working piston (4) as considered in the direction of rotation in such a manner that in the portion (39) the outer surface which engages behind the pivoted-out end of the pivotable valve (17) in the opened position merges in a continuous curve into the circular cylindrical portion (19) of the outer surface of the working piston (4),

h) the arrangement of a sealing strip in each case (23 and 35) on the eccentric piston (3) at the place where there is the greatest distance between the outer surface of the eccentric piston (3) and its axis of rotation, and on the working piston (4) at the edge which is formed by the collecting surface (33) for the explosion gases and the circular cylindrical portion (19) of the outer surface of the working piston (4).

2. Four-stroke internal combustion engine according to claim 1, characterised in that the slide valve (20) arranged slidably on the eccentric piston (3) has a rectangular cross-section.

3. Four-stroke internal combustion engine according to claim 1, characterised in that the valve flap (30) of the pivotable valve (17) is mounted to be pivotable about a pivot pin mounted in the first axially parallel wall of the combustion chamber (15) as considered in the direction of rotation of the working piston (4).

4. Four-stroke internal combustion engine according to claim 3, characterised in that the valve flap (30) is provided at its flanks with sealing strips (36) which extend substantially over the length of the flanks.

5. Four-stroke internal combustion engine according to claims 3 or 4, characterised in that at that surface of the valve flap (30) which faces towards the combustion chamber (15) there is provided a pressure application strip (40) which is caused, by the pressure of a spring force (39), to project with its free end over that surface of the valve flap (30) which faces towards the second piston chamber (2).

6. Four-stroke internal combustion engine according to claim 1, characterised in that below the sealing strips (23 and 35) arranged at the outer surfaces of the eccentric piston and working piston (3 and 4) there are provided pressure valves (25) communicating via supply ducts (26) with the oil pump provided for the internal combustion engine.

7. Four-stroke internal combustion engine according to claim 1, characterised in that in the position of the working piston (4) at the instant when the valve flap (30) moves pivotably out from its valve seat (31) the collecting surface (33) which is provided at the working piston (4) is directed perpendicularly to or with a slight inclination relatively to the surface of the valve flap (30) which faces towards the combustion chamber (15) in the furthest outwardly pivoted position.

8. Four-stroke internal combustion engine according to claims 1 and 6, characterised in that there is provided in the engine casing an oil return flow duct forming with the oil supply duct (26) through the motor shaft (5) an oil circuit.

9. Four-stroke internal combustion engine according to claim 1, characterised in that a cooling chamber (6) through which coolant flows is provided between the first and second piston chambers (1 and 2) for cooling the combustion chamber (15) and the mutually facing side parts (8) of the piston chambers (1 and 2).

10. Four-stroke internal combustion engine according to one of the preceding claims, characterised in that a plurality of assemblies, formed of two piston chambers (1 and 2) and eccentric and working pistons (3 and 4) arranged therein, are connected to the motor shaft (5), piston chambers (1 and 2) and pistons (3 and 4) of the assemblies being arranged phase-displaced relatively to one another at the angle by which the pistons (3 and 4) are connected differently from one another to the motor shaft (5).

**Revendications**

1. Moteur à combustion interne à quatre temps, possédant deux pistons rotatifs discoïdes qui sont chacun calés sur l'arbre du moteur dans une chambre à piston correspondant à l'épaisseur du piston et présentant une piste orbitale ou de révolution de forme cylindrique circulaire pour le piston, l'arbre du moteur traversant les chambres à pistons, la première chambre à piston présentant une tubulure d'aspiration pour le mélange d'air et de combustible, la deuxième chambre à piston présentant un orifice d'expulsion pour les gaz de combustion détendus et les deux chambres à pistons étant reliées l'une à l'autre par des canaux dans lesquels sont disposées des soupapes et qui communiquent avec un espace pour l'allumage du mélange d'air et de combustible, le piston rotatif prévu dans la première chambre à piston étant réalisé comme un piston excentré avec un pourtour tel que ce piston excentré, pendant son mouvement de rotation, est en contact avec la piste de révolution de la première chambre à piston par la ligne de sa périphérie externe la plus éloignée de l'axe de rotation, auquel cette ligne est parallèle, la première chambre à piston étant munie, entre la tubulure d'aspiration et l'embouchure du canal de liaison menant de l'espace d'allumage dans la première chambre à piston, d'une palette coulissante qui glisse sur la surface externe du piston excentré, contre laquelle elle est appuyée par une force de ressort, la palette délimitant, pendant la rotation du piston, une chambre d'aspiration variable et une chambre de compression variable, ensemble avec la ligne de contact entre le piston excentré et la piste de révolution, et le piston rotatif dans la deuxième chambre à piston, étant, après allumage du mélange d'air et de combustible et jusqu'au refoulement, sous l'action des gaz enflammés, caractérisé par la combinaison des particularités suivantes :

a) l'espace prévu pour l'allumage est réalisé comme une chambre de combustion (15) à volume variable,

b) une soupape à pivotement (17) recouvre l'ouverture de la chambre de combustion (15) vers la deuxième chambre à piston (2) pendant au moins la durée du passage du gaz comprimé de la première chambre à piston (1) dans la chambre de combustion (15),

c) une partie de la surface périphérique du second piston (4), monté centré et agissant comme piston moteur, est réalisée comme une partie d'une surface cylindrique circulaire (19) dont le rayon correspond, à un faible jeu près, à la trajectoire ou piste de révolution (12) pour le piston moteur (4), et constitue un appui pour l'extrémité pivotante de la soupape à pivotement (17) à la position de fermeture,

d) la section en forme de cylindre circulaire de la surface périphérique du piston moteur (4) est dimensionnée de manière que la durée pendant laquelle l'extrémité pivotante de la soupape à pivotement (17) est appliquée contre cette section (19) corresponde à la durée de la compression, allant de l'ouverture d'une soupape (16a) prévue dans le canal de transfert (16) de la première chambre à piston (1) à la chambre de combustion (15) et commandée en fonction du temps ou de la pression, jusqu'à ce que le rapport de compression préfixé soit atteint,

e) le piston moteur (4) est disposé de telle manière, par rapport au piston excentré (3), sur l'arbre (5) du moteur, que le piston moteur (4) soutient la soupape à pivotement (17) pendant la durée de pénétration du mélange comprimé dans la chambre de combustion (15), en la pressant contre le siège de soupape (31) prévu sur le bord de l'ouverture de la chambre de combustion (15) vis-à-vis de la deuxième chambre à piston (2),

f) la disposition d'une surface plane, s'étendant dans la deuxième chambre à piston (2) à la fin de la partie (19) en forme de cylindre circulaire de la surface externe, considéré dans le sens de rotation du piston moteur (4), la surface plane partant de cette surface externe du piston moteur (4) et servant de surface d'action pour les gaz enflammés produits lors de l'allumage des gaz comprimés dans la chambre de combustion (15), ladite surface plane, sous l'action des gaz enflammés, permettant en même temps un mouvement de pivotement limité de la soupape à pivotement (17) à partir de la position de fermeture de la chambre de combustion (15), la largeur de cette surface plane correspondant à l'épaisseur du piston discoïde et sa longueur n'étant pas supérieure à la longueur de l'ouverture de la chambre de combustion perpendiculairement à l'axe du piston,

g) la section (39) de la surface externe du piston moteur (4), qui s'étend entre l'extrémité de la surface d'action (33) avançant dans la chambre à piston (2) jusqu'au début de la section (19) en forme de cylindre circulaire de la surface externe du piston moteur (4), dans le sens de rotation, est conformée de manière que la surface externe, dans cette section (39), soutenant par l'arrière l'extrémité, ayant pivoté vers l'extérieur, de la soupape à pivotement (17), en position d'ouverture de celle-ci, se raccorde par une forme courbe régulière à la section (19) de forme cylindrique circulaire de la surface externe du piston moteur (4),

h) un segment d'étanchéité (23 et 35) est disposé sur le piston excentré (3), à l'endroit où la surface externe de ce piston (3) est la plus éloignée de l'axe de rotation de ce piston, ainsi que sur le piston moteur (4), sur l'arête formée par la surface d'action (33) pour les gaz enflammés et la partie (19) de forme cylindrique circulaire de la surface externe du piston moteur (4).

2. Moteur selon la revendication 1, caractérisé en ce que la palette (20), appuyée sur le piston excentré (3) et glissant sur ce piston, possède une section droite rectangulaire.

3. Moteur selon la revendication 1, caractérisé en ce que le volet (30), formant le clapet de la soupape à pivotement (17), est monté rotatif autour d'un axe monté dans une première paroi, considérée dans le sens de rotation du piston (4), qui est parallèle à l'axe de la chambre de combustion (15).

4. Moteur selon la revendication 3, caractérisé en ce que le volet (30) porte des segments d'étanchéité (36) s'étendant à peu près sur la longueur des flancs de ce volet.

5. Moteur selon la revendication 3 ou 4, caractérisé en ce que le volet (30) présente, sur sa face dirigée vers la chambre de combustion (15), une réglette d'appui (40) qui, sous la pression d'une force de ressort (39), dépasse par une extrémité libre de la face du volet (30) dirigée vers la deuxième chambre à piston (2).

6. Moteur selon la revendication 1, caractérisé en ce que des soupapes de pression (25), communiquant à travers des conduites d'amenée (26) avec la pompe à huile prévue pour le moteur, sont installées au-dessous des segments d'étanchéité (23 et 35) disposés sur les surfaces externes du piston excentré (3) et du piston moteur (4).

7. Moteur selon la revendication 1, caractérisé en ce que la surface d'action (33) prévue sur le piston moteur (4), est disposée de manière que lorsque le piston moteur (4) occupe la position correspondant à l'instant où le volet (30) de la soupape à pivotement (17) s'écarte de son siège (31) en pivotant vers l'extérieur, cette surface d'action (33) soit orientée perpendiculairement à la face du volet (30) dirigée vers la chambre de combustion (15), ou suivant une faible inclinaison par rapport à cette orientation perpendiculaire, lorsque le volet occupe la position de pivotement maximal vers l'extérieur.

8. Moteur selon les revendications 1 et 6, caractérisé en ce que le carter du moteur présente une conduite de retour d'huile qui constitue un circuit fermé d'huile avec la conduite d'amenée d'huile (26) traversant l'arbre (5) du moteur.

9. Moteur selon la revendication 1, caractérisé en ce qu'une chambre de refroidissement (6), traversée par un fluide de refroidissement, est prévue entre la première et la deuxième chambre à piston (1 et 2), en vue du refroidissement de la chambre de combustion (15) et des parties latérales (8) dirigées l'une vers l'autre de ces chambres à pistons (1 et 2).

10. Moteur selon une des revendications précédentes, caractérisé en ce que plusieurs ensembles, constitués chacun par deux chambres à pistons (1 et 2) et des pistons excentré (3) et moteur (4), disposés dans ces chambres, sont reliés à l'arbre (5) du moteur, les chambres à pistons (1 et 2) et les pistons (3 et 4) des ensembles étant mutuellement déphasés de l'angle suivant lequel les pistons (3 et 4) sont reliés de façon décalée les uns par rapport aux autres à l'arbre (5) du moteur.

0 085 427

Fig. 1

Fig. 2

Fig. 3

31   17                          38

Fig. 4

36   30            37 .

38

30        39    40      37

Fig. 5

4

Fig. 6

Fig. 7